# EUROPEAN PATENT APPLICATION

(11) **EP 4 676 110 A1**
(43) Date of publication of application: **07.01.2026**
(21) Application number: 24787863.0
(22) Date of filing: 13.03.2024
(51) Int. Cl.: H04W 12/122

(54) **NEW RADIO DENIAL-OF-SERVICE (DOS) ATTACK DEFENSE METHOD AND APPARATUS**

(30) Priority: 11.04.2023 CN 202310419217
(71) Applicant: ZTE CORPORATION, Shenzhen, Guangdong 518057 (CN)
(72) Inventor: FENG, Chao, Shenzhen, Guangdong 518057 (CN); HE, Baomin, Shenzhen, Guangdong 518057 (CN)
(74) Representative: Brunazzi, Stefano
(86) International application number: PCT/CN2024/081501
(87) International publication number: WO 2024/212757

(57) **Abstract**

Embodiments of the present invention provide a new radio denial-of-service (DOS) attack defense method and apparatus. The method includes: positioning the UE that initiates the new radio DOS attack to obtain location information of the UE, in response to a user equipment (UE) initiating a new radio DOS attack; and adjusting a beam coverage region of a base station according to the location information, to exclude the UE that initiates the new radio DOS attack from a beam coverage range.

## Description

### Cross-Reference to Related Application

This invention is based on Chinese patent application No. CN202310419217.5, filed on April 11, 2023 and entitled "NEW RADIO DENIAL-OF-SERVICE (DOS) ATTACK DEFENSE METHOD AND APPARATUS", and claims the priority to the invention, which is incorporated in its entirety herein by reference.

### Technical Field

Embodiments of the present invention relate to the field of communications, and in particular, to a new radio denial-of-service (DOS) attack defense method and apparatus.

### Background

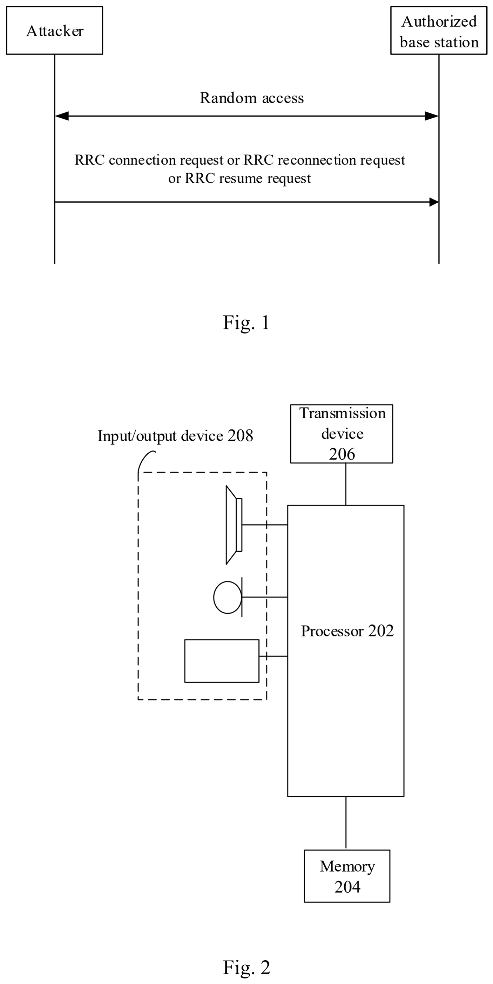

New radio (NR) access is a process of performing accessing before authentication. A terminal has already obtained a radio access resource before succeeding in identity authentication on a base station side, so the base station is vulnerable to attacks from a malicious terminal, thus causing various security threats. As shown in FIG. 1, when an authorized user equipment (UE) initiates signaling access such as a radio resource control connection request (MSG3), a base station can control a quantity of access UEs based on maximum NR radio resource control (RRC) configured by the base station. In the case that a malicious UE continues to initiate an MSG3, NR RRC access resources of the base station will be exhausted. As a result, an NR denial-of-service (DOS) attack is caused on the base station, which affects normal accessing of a UE. Before a core network authenticates the UE, the base station and the core network cannot obtain authentication information of the UE. The legal UE can carry a random value or temporary mobile subscriber identity (TMSI) information in the MSG3. However, since an authentication stage has not yet been performed, this information is only used as a temporary identifier. An attacker can arbitrarily forge a temporary identifier of the malicious UE. Therefore, the base station side cannot determine the authentication of the UE.

It is very easy for the attacker to obtain an international mobile subscriber identity (IMSI), a TMSI, and other authorized identity information of the authorized UE through a pseudo base station. In the case that the attacker uses the identity information of an authorized user to make an NR attack, and if the core network isolates the user or does not make a response to a request of the user based on the identity information, the authorized user can be affected. In the NR DOS attack using the MSG3, the identity of the malicious UE can be arbitrarily forged. Thus, at present, the industry uses a blacklist to restrict a malicious UE from accessing. Consequently, protection fails in many scenarios. Meanwhile, by using this mode, the attacker can make a DOS attack to a particular legal UE, and it is impossible to effectively protect against the DOS attack.

### Summary

The embodiments of the present invention provide a new radio denial-of-service (DOS) attack defense method and apparatus, to at least solve the problem that using a blacklist cannot effectively protect against a denial-of-service attack in the related technology.

According to an embodiment of the present invention, a new radio denial-of-service (DOS) attack defense method is provided, which is applied to a base station and includes: positioning the UE that initiates the new radio DOS attack to obtain location information of the UE, in response to a UE initiating a new radio DOS attack; and adjusting a beam coverage region of the base station based on the location information, to exclude the UE that initiates the new radio DOS attack from a beam coverage range.

According to another embodiment of the present invention, a new radio denial-of-service (DOS) attack defense apparatus is provided, which is applied to a base station and includes: a positioning module, configured to: position the UE that initiates the new radio DOS attack to obtain location information of the UE, in response to a UE initiating a new radio DOS attack,; and an adjustment module, configured to adjust a beam coverage region of the base station based on the location information, to exclude the UE that initiates the new radio DOS attack from a beam coverage range.

According to still another embodiment of the present invention, a computer-readable storage medium is further provided, storing a computer program, wherein the computer program is configured to, when the computer program is executed by a processor, cause the processor to implement the steps in any one of the method embodiments.

According to yet still another embodiment of the present invention, an electronic apparatus is further provided, including memory, a processor, and a computer program stored in the memory and is executable by the processor, the processor is configured to execute the computer program to implement the steps in any one of the method embodiments.

### Brief Description of the Drawings

FIG. 1 is a schematic relationship diagram of a malicious UE initiating a denial-of-service attack;
FIG. 2 is a block diagram of a hardware structure of a computer terminal of a new radio denial-of-service (DOS) attack defense method according to an embodiment of the present invention;
FIG. 3 is a schematic diagram of a principle of a network architecture of new radio denial-of-service (DOS) attack defense according to an embodiment of the present invention;
FIG. 4 is a flowchart of a new radio denial-of-service (DOS) attack defense method according to an embodiment of the present invention;
FIG. 5 is a flowchart of a new radio denial-of-service (DOS) attack defense method according to an embodiment of the present invention;
FIG. 6 is a block structural diagram of a new radio denial-of-service (DOS) attack defense apparatus according to an embodiment of the present invention;
FIG. 7 is a block structural diagram of an adjustment module of a new radio denial-of-service (DOS) attack defense apparatus according to an embodiment of the present invention;
FIG. 8 is a block structural diagram of a new radio denial-of-service (DOS) attack defense apparatus according to an embodiment of the present invention;
FIG. 9 is a block structural diagram of a detecting module of a new radio denial-of-service (DOS) attack defense apparatus according to an embodiment of the present invention;
FIG. 10 is a schematic diagram of new radio denial-of-service (DOS) attack detection and physical isolation according to an embodiment of the present invention;
FIG. 11 is a schematic diagram of an attack principle of a new radio denial-of-service (DOS) attack according to an embodiment of the present invention;
FIG. 12 is a schematic flowchart of a denial-of-service attack detection method according to an embodiment of the present invention;
FIG. 13 is a schematic diagram of a principle of obtaining a location of a signal source by a TDOA estimation positioning method according to an embodiment of the present invention;
FIG. 14 is a schematic diagram of a protection principle of an attack to an RRC connection resource according to an embodiment of the present invention;
FIG. 15 is a schematic diagram of a protection principle of an attack to an RRC connection resource according to an embodiment of the present invention; and
FIG. 16 is a diagram of a principle of information interaction of a new radio denial-of-service (DOS) attack defense according to an embodiment of the present invention.

### Detailed Description of the Embodiments

The embodiments of the present invention will be described in detail below with reference to the accompanying drawings and the embodiments.

It should be noted that the terms "first", "second", etc. in the specification and claims of the embodiments of the present invention and the above accompanying drawings are defined to distinguish similar objects, and do not have to be used to describe a specific order or sequence.

Method embodiments according to the embodiments of the present invention can be executed on a mobile terminal, a computer terminal, or a similar computing device. Execution on the computer terminal is taken as an example. FIG. 2 is a block diagram of a hardware structure of a computer terminal of a new radio denial-of-service (DOS) attack defense method according to an embodiment of the present invention. As shown in FIG. 2, the computer terminal may include one or more (only one is shown in FIG. 2) processors 202 (the processor 202 may include but are not limited to a micro processing unit (MCU), a field programmable gate array (FPGA), and other processing apparatuses) and memories 204 configured for storing data. The computer terminal may further include a transmission device 206 for a communication function and an input/output device 208. A person of ordinary skill in the art can understood that the structures shown in FIG. 2 are only illustrative, and a limitation will not be made on the structures of the computer terminal. For example, the computer terminal may further include more or fewer components than those shown in FIG. 2, or have a configuration different from that shown in FIG. 2.

The memory 204 can be configured to store a computer program, such as software programs and modules of application software, such as a computer program corresponding to the new radio denial-of-service (DOS) attack defense method in this embodiment of the present invention. The processor 202 executes various functional applications and data processing by executing the computer program stored in the memory 204, that is, to implement the above method. The memory 204 may include a high-speed random access memory and may further include a non-volatile memory, such as one or more magnetic storage apparatuses, a flash memory, or other non-volatile solid state memories. In some examples, the memory 204 may further include a memory remotely located with respect to the processor 202. These remote memories may be connected to the mobile terminal through a network. Examples of the above network include, but are not limited to, Internets, intranets, local area networks, mobile communication networks, and combinations thereof.

The transmission device 206 is configured to receive or transmit data via a network. The examples of the above network may include a wireless network provided by a communication provider of the computer terminal. In one example, the transmission device 206 includes a network interface controller (NIC) that may be connected to other network devices through a base station for communication with the Internet. In one example, the transmission device 206 may be a radio frequency (RF) module for communicating with the Internet in a radio manner.

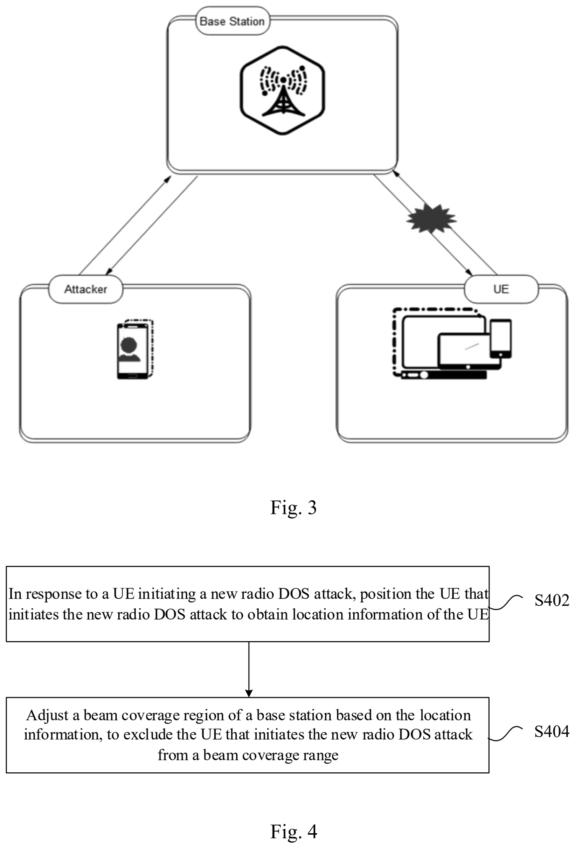

FIG. 3 is a schematic diagram of a principle of a network architecture of new radio denial-of-service (DOS) attack defense according to an embodiment of the present invention. This embodiment of the present invention can be executed on the network architecture shown in FIG. 3. As shown in FIG. 3, the network architecture includes: a user terminal (a UE), a wireless network communication device (a base station), and a malicious UE (an Attacker). In a process that the UE accesses a mobile cellular network, the UE as a terminal initiates an access request. The base station as a node for connecting the mobile network to the UE performs access control on the UE. The malicious UE as a malicious terminal initiates a radio access request to the base station to maliciously occupy a radio access resource of the base station. Ultimately, an authorized UE cannot access.

This embodiment provides a new radio denial-of-service (DOS) attack defense method that is executed on the above computer terminal or network architecture. FIG. 4 is a flowchart of a new radio denial-of-service (DOS) attack defense method according to an embodiment of the present invention. As shown in FIG. 4, the flow includes the following steps:
At S402: In response to a UE initiating a new radio DOS attack, position the UE that initiates the new radio DOS attack to obtain location information of the UE.
At S404: Adjust a beam coverage region of the base station based on the location information, to exclude the UE that initiates the new radio DOS attack from a beam coverage range.

Through the above steps, in response to the UE initiating the new radio DOS attack, the UE that initiates the new radio DOS attack is positioned to obtain the location information of the UE; and the beam coverage region of the base station is adjusted according to the location information, to exclude the UE that initiates the new radio DOS attack from the beam coverage range. The problem that using a blacklist in the related technology cannot effectively protect against a denial-of-service attack. A risk of a new radio denial-of-service attack that the base station faces is greatly alleviated, and an effect of availability and toughness of a wireless communication network in new radio access is enhanced.

An execution entity of the above steps may be, but is not limited to, a base station, a terminal, and the like.

In one embodiment, the positioning the UE that initiates the new radio DOS attack to obtain location information of the UE includes: requesting measured information from a plurality of transmission-reception points (TRPs), wherein the plurality of TRPs perform beam positioning on the UE that initiates the new radio DOS attack by using a time difference of arrival(TDOA), based on a preamble used by the UE that initiates the new radio DOS attack for random access.

In one embodiment, the adjusting a beam coverage region of the base station based on the location information includes: transmitting the location information and distribution data of an authorized UE to a data center, where the authorized UE includes a UE that does not initiate a new radio DOS attack; and receiving optimal beam coverage issued by the data center, and adjusting the beam coverage region based on the optimal beam coverage.

In one embodiment, the beam coverage region of the base station is adjusted based on the location information, to form a coverage hole, thereby preventing access by the UE (i.e. a malicious UE) that initiates the new radio DOS attack. The UE that initiates the new radio DOS attack is excluded from the beam coverage range.

In one embodiment, the transmitting the location information and distribution data of an authorized UE to a data center and the receiving optimal beam coverage issued by the data center may be performed by a core network. Or an interaction operation with the data center may be completed through another transmitting or receiving apparatus (module, system). This embodiment of the present invention does not impose a specific limitation.

In one embodiment, the adjusting the beam coverage region based on the optimal beam coverage includes one of the following: in response to a cell in which the base station is located being a low-frequency cell and a quantity of authorized UEs of a beam in which the UE that initiates the new radio DOS attack is located being less than a first preset threshold, turning off the beam in which the UE that initiates the new radio DOS attack is located; and in response to the cell in which the base station is located being a millimeter-wave cell, turning off a beam in which the UE that initiates the new radio DOS attack is located or adjusting the beam in which the UE that initiates the new radio DOS attack is located.

In one embodiment, the adjusting the beam coverage region based on the optimal beam coverage further includes the following situations: in response to the cell in which the base station is located being the low-frequency cell and the quantity of authorized UEs of the beam in which the UE that initiates the new radio DOS attack is located being equal to or greater than the first preset threshold, not processing the beam in which the UE that initiates the new radio DOS attack is located; and in response to an access quantity of authorized UEs of the cell in which the base station is located being equal to a second preset threshold, not processing the beam in which the UE that initiates the new radio DOS attack.

In this embodiment of the present invention, the quantity of authorized UEs being less than the first preset threshold indicates a small quantity of authorized UEs, and the quantity of authorized UEs being equal to or greater than the first preset threshold indicates a large quantity of authorized UEs. A numerical value of the first preset threshold may be determined based on an actual situation. That is, the quantity of authorized UEs is determined based on an actual situation. For the millimeter-wave cell, there is no need to consider the quantity of authorized UEs. The beam in which the UE that initiates the new radio DOS attack is located may be turned off or the beam in which the UE that initiates the new radio DOS attack is located may be adjusted. The adjustment includes that a phase of the beam in which the UE that initiates the new radio DOS attack is located may be adjusted.

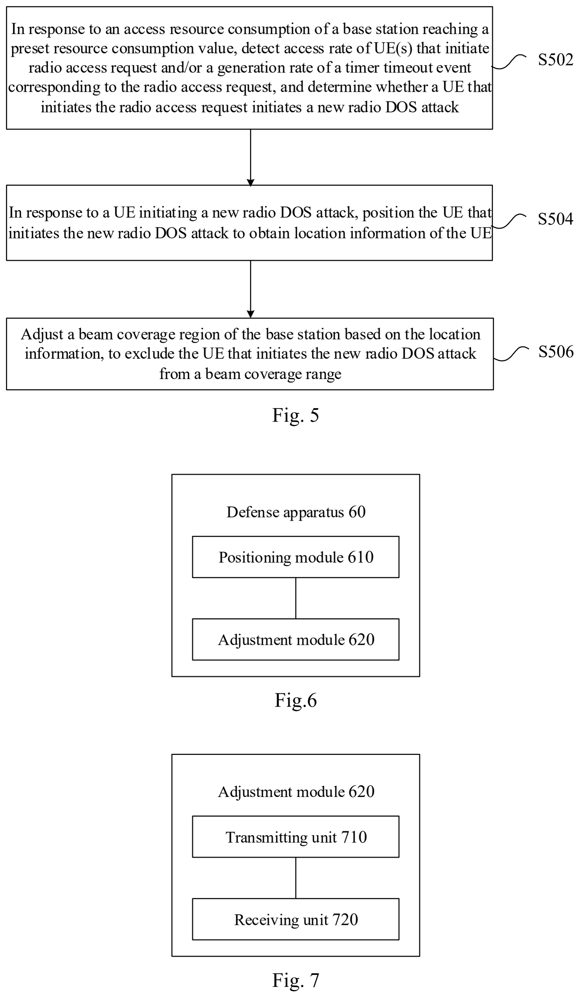

In one embodiment, FIG. 5 is a flowchart of a new radio denial-of-service (DOS) attack defense method according to an embodiment of the present invention, as shown in FIG. 5, the flow includes the following steps:
At S502: In response to an access resource consumption of a base station reaching a preset resource consumption value, detect access rate of UE(s) that initiate radio access request and/or a generation rate of a timer timeout event corresponding to the radio access request, and determine whether a UE that initiates the radio access request initiates a new radio DOS attack.
At S504: In response to a UE initiating a new radio DOS attack, position the UE that initiates the new radio DOS attack to obtain location information of the UE.
At S506: Adjust a beam coverage region of the base station based on the location information, to exclude the UE that initiates the new radio DOS attack from a beam coverage range.

In one embodiment, for S502, in response to a Denial of Service (DoS) attack initiated by a malicious User Equipment (UE), the attacker typically floods the radio frequency resources with a high or abnormally high access rate (attack frequency) to occupy them. Therefore, whether a UE initiates a DOS attack can be determined by detecting the access rate of the UE(s) that initiate the radio access request. A malicious UE initiates half-connections and executes waits, causing the half-connections to time out during the waiting period. Therefore, it's also possible to detect the rate at which timer expiry events associated with UE's radio access request occur, to determine if any UE is mounting a DoS attack. Real-world scenarios are not limited to these two situations; there can be cases where the connection speed is slow but the timer expiry event generation rate is high, or there can be cases where both the connection speed and the timer expiry event generation rate are high. The next step of determination needs to be performed in either of the above situations, to confirm whether a UE that initiates the radio access request initiates a new radio DOS attack.

In one embodiment, the detecting access rate of UE(s) that initiate radio access request and/or a generation rate of a timer timeout event corresponding to the radio access request, and determining whether a UE that initiates the radio access request initiates a new radio DOS attack includes: detecting whether beam access distribution of the UE(s) that initiate the radio access request is abnormal, based on the access rate of the UE(s) that initiate the radio access request and the generation rate of the timer timeout event; detecting whether an access behavior of a UE with an abnormal beam access distribution is abnormal; and detecting a UE with an abnormal access behavior based on a machine learning algorithm to determine the UE that initiates the new radio DOS attack.

In one embodiment, the detecting whether beam access distribution of the UE(s) that initiate the radio access request is abnormal includes: in response to the access rate of the UE(s) that initiate the radio access request reaching a first preset value and/or the generation rate of the corresponding timer timeout event reaching a second preset value, counting preamble of the UE(s) that initiate the radio access request; and in response to a quantity of UEs that use a fixed preamble to initiate radio access request in the same beam reaching a third preset value, determining that the beam access distribution of the UEs that initiate the radio access request is abnormal.

In one embodiment, the detecting whether an access behavior of the UE with the abnormal beam access distribution is abnormal includes: adjusting a wait time value in radio resource control (RRC) setup reject signaling; and in response to the adjusted wait time value failing to cause the access rate of the UE(s) that initiate the radio access request to reach a preset variation range, determining that the access behavior of the UE(s) that initiate the radio access request is abnormal.

In the above embodiments, the first preset value, the second preset value, the third preset value, the first preset threshold, and the second preset threshold are actually set based on actual situations, where first, second, and third are only for distinguishing purposes, but they are not distinguished in a sequential order.

According to the descriptions in the above implementations, a person skilled in the art may clearly learn that the method according to the foregoing embodiments may be implemented by relying on software and an essential commodity hardware platform or by using hardware, but the former is a better implementation in most cases. Based on such an understanding, the technical solutions of the embodiments of the present invention essentially, or the part contributing to the related technology, may be presented in the form of a software product. The computer software product is stored in a storage medium (for example, a read-only memory (ROM)/random access memory (RAM), a magnetic disk, or an optical disk) including a plurality of instructions to enable a terminal device (which may be a mobile phone, a computer, a server, a network device, or the like) to perform the method described in the embodiments of the present invention.

This embodiment further provides a new radio denial-of-service (DOS) attack defense apparatus. The apparatus is configured to implement the above embodiments and preferred implementations. Those contents that have been described will not be elaborated. As used below, the term "module" can be a combination of software and/or hardware that implements a predetermined function. Although the apparatus described in the following embodiments is preferably implemented in software, the implementation of hardware or a combination of software and hardware is also possible and envisioned.

FIG. 6 is a block structural diagram of a new radio denial-of-service (DOS) attack defense apparatus according to an embodiment of the present invention. As shown in FIG. 6, the defense apparatus 60 includes: a positioning module 610, configured to position the UE that initiates the new radio DOS attack to obtain location information of the UE, in response to a UE initiating a new radio DOS attack; and an adjustment module 620, configured to adjust a beam coverage region of the base station based on the location information, to exclude the UE that initiates the new radio DOS attack from a beam coverage range.

In one embodiment, the positioning module 610 is further configured to request measured information from a plurality of transmission-reception points (TRPs), wherein the plurality of TRPs perform beam positioning on the UE that initiates the new radio DOS attack by using a time difference of arrival (TDOA), based on a preamble used by the UE that initiates the new radio DOS attack for random access.

FIG. 7 is a block structural diagram of an adjustment module of a new radio denial-of-service (DOS) attack defense apparatus according to an embodiment of the present invention. As shown in FIG. 7, the adjustment module 620 includes: a transmitting unit 710, configured to transmit the location information and distribution data of an authorized UE to a data center, where the authorized UE includes a UE that does not initiate a new radio DOS attack; and a receiving unit 720, configured to receive optimal beam coverage issued by the data center, and adjust the beam coverage region based on the optimal beam coverage.

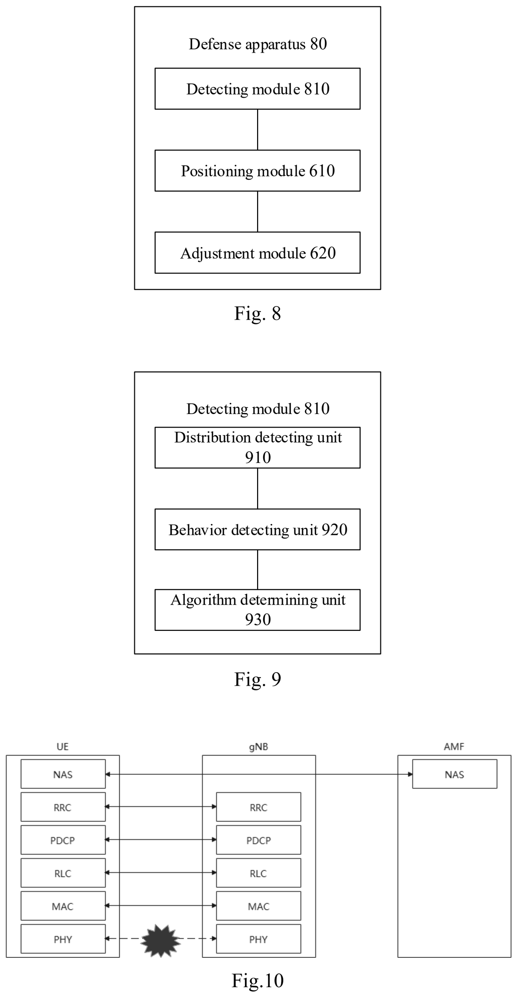

FIG. 8 is a block structural diagram of an adjustment module of a new radio denial-of-service (DOS) attack defense apparatus according to an embodiment of the present invention. As shown in FIG. 8, the defense apparatus 80 further includes: a detecting module 810, configured to determine whether a UE that initiates the radio access request initiates a new radio DOS attack, by detecting access rate of UE that initiate radio access request and/or a generation rate of a timer timeout event corresponding to the radio access request, in response to an access resource consumption of the base station reaching a preset resource consumption value.

FIG. 9 is a block structural diagram of a detecting module of a new radio denial-of-service (DOS) attack defense apparatus according to an embodiment of the present invention. As shown in FIG. 9, the detecting module 810 includes: a distribution detecting unit 910, configured to detect whether beam access distribution(s) of the UE(s) that initiate the radio access request is abnormal, based on the access rate of the UE(s) that initiate the radio access request and the generation rate of the timer timeout event; a behavior detecting unit 920, configured to detect whether an access behavior of the UE with the abnormal beam access distribution is abnormal; and an algorithm determining unit 930, configured to detect a UE with an abnormal access behavior based on a machine learning algorithm to determine the UE that initiates the new radio DOS attack.

It should be noted that the above modules or units can be implemented through software or hardware. The latter can be implemented in the following ways, but are not limited to: the above modules or units are located in the same processor; or, the above modules or units may be respectively located in different processors in the form of any combination.

An embodiment of the present invention further provides a computer-readable storage medium, storing a computer program, wherein the computer program is configured to, when the computer program is executed by a processor, cause the processor to implement the steps in any one of the method embodiments when executed.

In one embodiment, the computer-readable storage medium may include, but is not limited to: various media that can store computer programs, such as a USB flash disk, a read-only memory (ROM), a random access memory (RAM), a mobile hard disk drive, a magnetic disk, or an optical disc.

An embodiment of the present invention further provides an electronic apparatus, including a memory, a processor, and a computer program stored in the memory and is executable by the processor, the processor is configured to execute the computer program to implement the steps in any one of the method embodiments.

In one embodiment, the electronic apparatus may further include a transmission device and an input/output device, where the transmission device is connected to the processor, and the input/output device is connected to the processor.

Obviously, those skilled in the art should understand that the various modules or steps of the embodiments of the present invention can be implemented by using a general-purpose computing apparatus, which can be concentrated on a single computing apparatus or distributed on a network composed of a plurality of computing apparatuses. The modules or steps can be implemented by using program codes that can be executed by a computing apparatus, so that the modules or steps can be stored in a storage apparatus for execution by the computing apparatus. Furthermore, in some cases, the steps shown or described can be executed in an order different from those here, or the steps can be separately made into various integrated circuit modules, or a plurality of modules or steps among the modules or steps can be made into single integrated circuit modules for implementation. In this way, the embodiments of the present invention are not limited to any specific combinations of hardware and software.

To enable a person skilled in the art to understand the technical solutions of the embodiments of the present invention more clearly, the following will elaborate specific scenario embodiments.

### Scenario embodiment I

An NR next generation node B (gNB) is an access device that connects a terminal to a mobile communication network. One of the most important functions is to perform radio access control on the terminal to ensure normal access of an authorized terminal and deny an unauthorized terminal.

A user equipment (UE) is a terminal device used by an end-user for communication. In a normal case, an access behavior of an authorized terminal conforms to a 3GPP protocol, and the authorized terminal authentication initiates a request to a base station and is controlled by the base station. A malicious UE does not completely follow the provisions of the protocol and is not controlled by the base station. The malicious UE is a malicious terminal device that is specially processed. An attacker creates the malicious UE by using mature software defined radio (SDR) software and hardware tools, controls the malicious UE through a computer to continuously initiate new radio access request to the base station, and sets up a large number of new radio half-connections within short time. This exhausts new radio resources of the base station and causes an attack such as a denial-of-service (DOS) attack to the base station.

Non-cooperative positioning mainly means using communication between the terminal device and the base station for positioning, and no other devices participate in the positioning process. A target of the non-cooperative positioning may be a single-mode terminal, an old terminal that does not support 5G, or the like, or may be a non-cooperative user who is unwilling to provide location information. This type of positioning can be divided into time-based time of arrival (TOA) or a time difference of arrival (TDOA), an angle of arrival (AOA), a frequency difference of arrival (FDOA), received signal strength (RSS), fingerprints, and the like based on different use parameters. When the malicious UE is positioned, since the malicious UE will not provide its location information by itself, the malicious UE generally can only be positioned in a non-cooperative manner.

Beam forming (BF), also referred to as beamforming or spatial filtering, is a multi-antenna transmission technology applied to a small-spacing antenna array. Its main principle is to use the strong correlation of array signals and the interference principle of waves to generate a radiation pattern with strong directionality, so that a main lobe of the radiation pattern adaptively points towards a direction of arrival of a user terminal, thereby increasing a signal-to-noise ratio, a system capacity, and a coverage range. In this embodiment of the present invention, an antenna of the base station avoids forming a beam in the area where the malicious UE is located, by controlling beam coverage. Since the malicious UE cannot receive the access response from the base station, the access procedure of the malicious UE is interrupted, thus achieving the defense against the air interface DOS attack caused by the malicious UE.

A directional antenna (DA) also known as a beam antenna, is an antenna that radiates or receives higher power in a specific direction, which can improve performance and reduce interference from harmful sources.

This embodiment provides the solution to mainly address the security threat that in a multi-synchronous signal block (SSB) NR communication system, a malicious terminal initiates a radio access request to consume limited new radio access resources of the base station.

This embodiment of the present invention demonstrates and analyzes the risk of the denial-of-service attack that uses the radio resource control connection request (MSG3) as an attack load on the base station in the new radio access stage. In response to the problem that using a blacklist technology cannot eliminate the residual risk and will exacerbate the risk of the denial-of-service attack, a method and apparatus are provided, which determine a beam space in which the UE is located, based on a preamble in an access request of a UE, identify location information of a malicious terminal through radio measurement, identify a new radio denial-of-service attack based on a new radio access rate, a new radio half-connection proportion, a new radio access behavior, and the like, and change a coverage region of a part of a beam of the base station by adjusting physical parameters such as a phase, a delay, and power of a beam signal, to exclude the malicious UE from a coverage range of the base station, thus finally completing isolation of the malicious UE in a physical space, interrupting an access process of the malicious UE, and ultimately protecting, based on a preset protection strategy, against an access request initiated by the malicious terminal. Thus, the risk of the denial-of-service attack that the base station faces is greatly relieved, and availability and toughness of a wireless communication network in new radio access are improved.

In this embodiment, the defense against the new radio DOS includes two parts: new radio DOS attack detection and physical isolation. The two functions are deployed on a base station entity and are completed through hardware and software cooperation. FIG. 10 is a schematic diagram of new radio denial-of-service (DOS) attack detection and physical isolation according to an embodiment of the present invention. As shown in FIG. 10, the physical isolation implements protection by cutting off traffic of a physical layer PHY. In the new radio DOS attack detection, a determination is made mainly relying on data such as position data of an access terminal that is obtained by the PHY layer, a UE access behavior obtained by an RRC layer, and an access preamble.

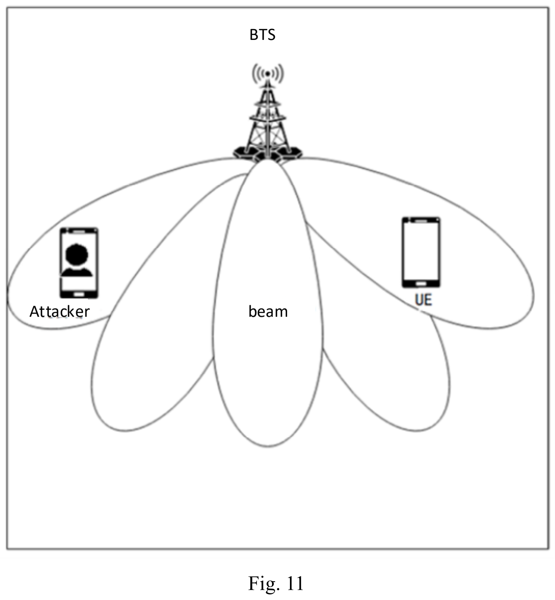

A new radio DOS attack detection method is as follows:
(1) An abnormal spatial distribution and radio direction pattern characteristic of a malicious UE. FIG. 11 is a schematic diagram of an attack principle of a new radio denial-of-service (DOS) attack according to an embodiment of the present invention. As shown in FIG. 11, when an attack occurs, an attacker selects a leftmost beam to initiate access (determined by a spatial location of the attacker). From the perspective of a base stations (BTs), compared with other beams, a large number of UEs use fixed preambles to initiate access request from a beam set. In terms of a spatial distribution of the UEs, it is an abnormal scenario. The base station can identify data such as a distribution of the UEs in each beam by counting a distribution characteristic of the preambles. A basic principle is that the base station can set one or more preambles for each beam, and cell coverage of the base station is formed by combining a plurality of beams. The UEs can select corresponding beams and corresponding preambles based on signal strengths of the beams to initiate access. Therefore, the base station can set preset values based on the preambles to determine whether access rates of the UEs/distributions of the UEs/quantities of half-connections in coverage regions of the beams are abnormal.
(2) The particularity of access connections: To implement resource imbalance between requests and responses, the attacker can set up a large number of new radio half-connections, and the base station side can generate a large number of timer timeout events. To avoid such a phenomenon that a normal UE preempts a new radio access resource because the base station releases resources due to timer timeout. An access rate of the malicious UE will be high compared with a new radio access rate in a normal environment. In a true attack, the normal UE cannot preempt the new radio access resource only if the access rate of the malicious UE reaches a value Therefore, the base station can identify an attack by setting a new radio access rate value and a generation rate (quantity) of timer timeout events.
(3) Non-compliance with the protocol, after the authorized UE fails to access due to insufficient resources of the base station, the authorized UE can receive setup reject signaling (RRC Connection Reject). The setup reject signaling contains a wait_time field which will require the UE to wait for wait_time seconds before accessing a cell or attempting to access other cells. However, the malicious UE will not execute this signaling and may continuously initiate an access request in a cell, and the access request will always maintain a high rate. The reason why the malicious UE generates this behavior is that if the malicious UE waits, the previously established half-connection will time out during waiting, so that the base station releases a large number of access resources after the waiting ends, making it impossible for the malicious UE to exhaust the access resources of the base station in one time, giving an opportunity to the authorized UE to preempt access resources and complete the access, and rendering the new radio DOS attack unauthorized. Through this characteristic, by adjusting a value of wait_time in RRC Connection Reject, the base station measures whether a new radio access rate will change as wait_time changes. If an amplitude of variation is small, it indicates that the new radio DOS attack may be caused by the malicious UE. In addition, according to the protocol, if the authorized UE fails in accessing more than five times, cell reselection will be performed, which means that in a normal scenario, a rate of accessing the same cell will not always remain at a high level.

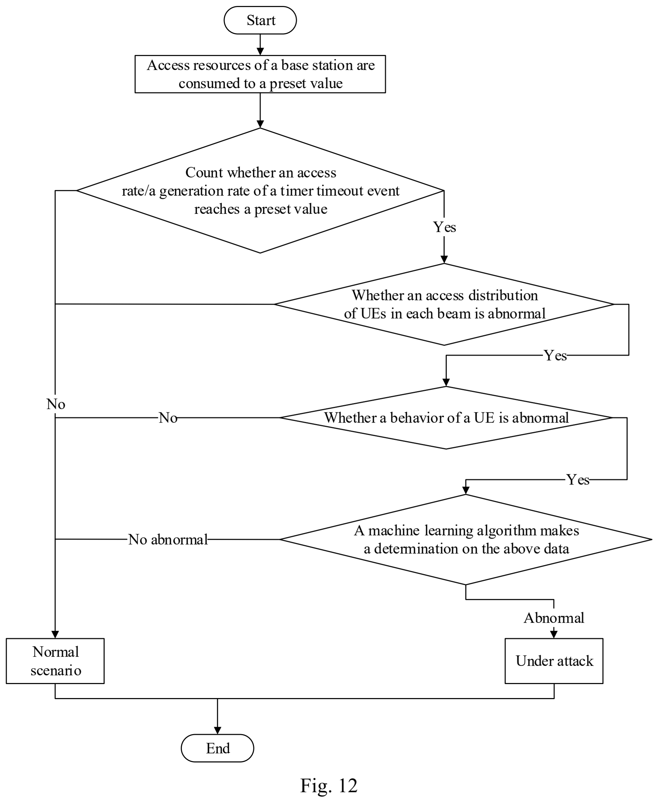

FIG. 12 is a schematic flowchart of a denial-of-service attack detection method according to an embodiment of the present invention. As shown in FIG. 12, when access resources of a base station are consumed to a preset value, the base station starts a detection flow:
1. Count whether an access rate and a generation rate of a timer timeout event reach preset values. Since only the access request rate/the generation rate of the timer timeout event is counted, a fewer of resources of the base station are consumed. Therefore, determination is preferentially performed.
2. If the access request rate exceeds the preset value, a distribution of an access request in each beam is identified based on an access preamble characteristic.
3. If the above data exceeds the preset values, whether an access behavior is abnormal is observed by adjusting the setup reject signaling (RRC Connection Reject). If the access behavior is abnormal, the data is transmitted to a machine learning algorithm to make a decision. The above data includes the statistical access rate, the generation rate of the timer timeout event, the distribution in each beam, and the like. During the implementation, the above data is input to the machine learning algorithm. The algorithm performs detection and determination based on internal operations and a detection logic of the algorithm. This will not be elaborated here. In one embodiment, the machine learning algorithms is selected by an operator based on an actual scenario. Detection results of the machine learning algorithm include an abnormal detection result and a normal detection result. The normal detection result indicates that the current UE does not initiate an attack and a communication scenario is normal. If the detection result of the machine learning algorithm is abnormal, it indicates that the current UE initiates an attack, that is, the base station is under attack. After the abnormal and normal detection results are obtained and whether the base station is under attack is determined, the flow of the denial-of-service attack detection method shown in FIG. 12 ends. If the detection result is abnormal, that is, after the base station is under attack, the flow of the new radio denial-of-service (DOS) attack defense method provided by this embodiment of the present invention needs to be continued, to continue to implement the step of adjusting the beam coverage of the base station in the new radio denial-of-service (DOS) attack defense method.

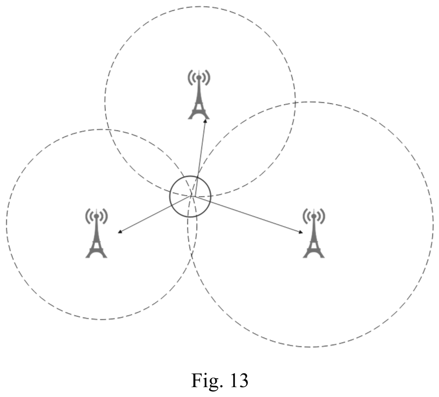

In this embodiment, a space in which a UE is located is identified by using a TDOA estimation positioning method (which is replaceable according to different scenarios) and a preamble for random access use by the UE. FIG. 13 is a schematic diagram of a principle of obtaining a location of a signal source by a TDOA estimation positioning method according to an embodiment of the present invention. As shown in FIG. 13, a plurality of transmission-reception points (TRPs) calculate, based on preambles (identified access request), time at which the same access request arrives at the TRPs. By using radio propagation time and speed, distances between the signal source and the TRPs can be calculated. By using the TRPs as circle centers and using the distances as radiuses, an interaction of circles is the location of the signal source. The base station adjusts the beam coverage based on signal measurement data to complete protection against an attack. In one embodiment, whether it is the same access request signal based on a preamble is determined, and in order to avoid a determination error, this determination is made after the preamble is counted for many times. For the same access request signal, reception times of different TRPs are different. When the plurality of TRPs receive the same access request signal, a time difference of arrival may be caused. Therefore, the location of the signal source can be obtained by using the TDOA estimation positioning method.

An antenna of the base station forms a plurality of beams to cover one cell based on a beam forming principle (which has a directionality characteristic in which energy of the beams is concentrated in a specified direction while energy in other directions is canceled out), and cell coverage can be adjusted based on a forming weight of each beam of the cell, so that the base station can flexibly configure signal coverage. If the base station has more coverage beams, it is more flexible for the base station to adjust the signal coverage, and the protection has less impact on an authorized UE, so as to implement physical isolation on a new radio DOS attacker and minimize the impact on an authorized user.

According to the configuration of the base station, distribution of malicious UEs and authorized UEs can be divided into the following scenarios:
1. There are a small number of authorized users in a low-frequency cell (at most including eight beams) and in a beam in which a malicious UE is located: Since the low-frequency cell has a wider beam and a coarser control granularity, a general strategy is directly turning off the beam in which the malicious UE is located.
2. There are a large number of authorized users in a low-frequency cell and in a beam in which a malicious UE is located: A general strategy is taking no measures.
3. There are a small number of authorized users in a millimeter-wave cell (at most including 64 beams) and in a beam in which a malicious UE is located: Since the millimeter-wave cell has a narrower beam and a finer control granularity, and a quantity of users in a single beam is limited, a general strategy is adjusting or turning off the beam in which the malicious UE is located.
4. There are a large number of authorized users in a millimeter-wave cell and in a beam in which a malicious UE is located: A general strategy is controlling or turning off the beam in which the malicious UE is located.
5. When a quantity of authorized users accessing a cell reaches a value (the new radio DOS attack has little impact on users having accessed the cell), a general strategy is taking no measures.

In a true environment for actual implementation, due to the location of the beam in which the malicious UE is located, the mobility, an environment around the base station, and other factors, the setting of the beam coverage strategy needs to be combined with the machine learning algorithm to implement a more flexible protection strategy.

### Scenario embodiment II

In this embodiment, the denial-of-service attack defense method provided in this embodiment of the present invention will be introduced with reference to an attacking flow.

Before new radio access authentication, a malicious UE transmits a large number of MSG3s or RRC connection setup completes (MSG5s), attack protecting against the new radio DOS attack for RRC connection quantity threshold resource at base station.

### Attack case I

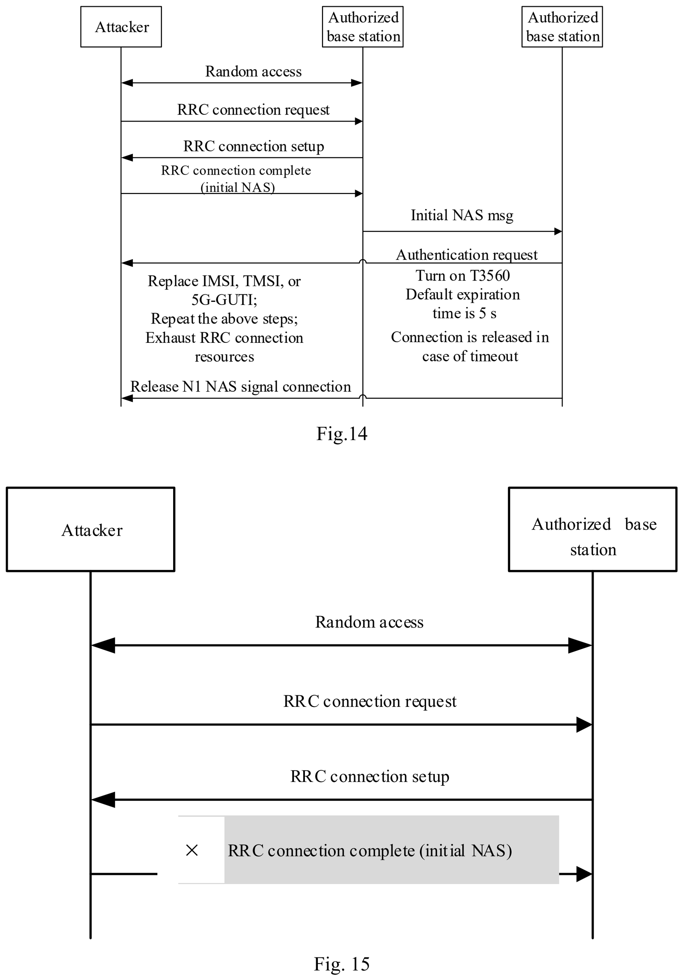

FIG. 14 is a schematic diagram of a protection principle of an attack to an RRC connection resource according to an embodiment of the present invention. As shown in FIG. 14, an attacker uses a source-code-modified terminal to frequently execute random access, RRC connection request, and RRC connection setup complete and transmit an "initial network attached storage (NAS) message". The message carries an authorized international mobile subscriber identity (IMSI).

After receiving the "initial NAS message", a core network initiates authentication, replies to the attacker with an Authentication request, and turns on a timer T3560 (a default value of which is 5 s).

The attacker receives the Authentication request and does not reply to the core network with an Authentication response. Instead, initiating a request again and replaces the authorized IMSI in the NAS message. The above process is continuously repeated.

The reply is not made here because the core network initiates Timer T3410, usually 5 seconds, after sending an Authentication request. If a response is received, the core network will stop Timer T3410, preventing any subsequent attacks from being carried out.

In actual testing, for Case I, if an RRC connection quantity resource of the base station is 100, an attack rate needs to reach 25 RRC connections/s or above in order for the malicious UE to have a sufficient ability to preempt RRC resources and in order to ensure that a normal UE is subjected to a new radio DOS attack.

### Attack case II

FIG. 15 is a schematic diagram of a protection principle of an attack to an RRC connection resource according to an embodiment of the present invention. As shown in FIG. 15, an attacker uses a malicious UE to execute Random access, uses RRC connection request with different TMSIs or Random Values, and waits for a network side to reply with RRC Connection Setup. However, an attacking terminal does not reply with an RRC Connection Setup Complete message. The above process is continuously repeated. The reason of no reply here is that after a base station transmits RRC Connection Setup, the base station may turn on a 2 s timer. If there is a reply, the result is similar to the above content.

In actual testing, for Case II, if an RRC connection quantity resource of the base station is 50, an attack rate needs to reach 30 RRC connections/s or above in order for the malicious UE to have a sufficient ability to preempt RRC resources and in order to ensure that a normal UE is subjected to a new radio DOS attack.

In the above two attack cases, by attacking the RRC connection quantity threshold resource, the RRC connection quantity resource of the base station is exhausted, so that an authorized UE lacks RRC connection resources and cannot access, but is subjected to a DOS attack. The attack means in Case I is similar to that in Case II, except that Case I requires a large number of authorized IMSIs to ensure identity authentication (if the identity is unauthorized, the core network side will transmit an authentication failure message instead of turning on the timer T3410), while Case II does not require an authorized identity (a Random value or any TMSI can be used), but the time of the timer is generally 2 s. Therefore, if the base station has more RRC connection quantity resources, the access rate required to cause new radio DOS needs to be higher. From a defensive perspective, the attacking costs of the attacker can be increased by optimizing the time of the timer. For Casce I, an authorized identity (IMSI) can be obtained by using a pseudo base station. For Case II, the attacker may not provide identity information. Since the authorized identity of the attacker cannot be distinguished in the attacking process, conventional blacklist protection not only fails, but also affects an authorized UEs. Therefore, in this embodiment of the present invention, a signal is positioned based on a preamble transmitted by a UE in a random access process. For the above cases, the base station can adjust a part of the beam coverage to generate a coverage hole, thus interrupting the access flow of the malicious UE and completing protection.

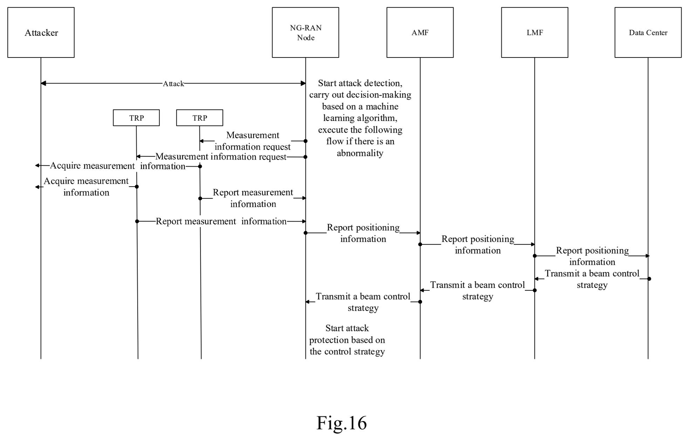

FIG. 16 is a diagram of a principle of information interaction of a new radio denial-of-service (DOS) attack defense according to an embodiment of the present invention. As shown in FIG. 16, the following is included:
Attacker: maliciously requesting access resources from a base station and initiating a DOS attack to an authorized terminal.
NG-RAN Node: managing radio access resources and providing a communication service to a terminal.
AMF: It is an access and mobility management function (AMF) which provides position service messages between a UE and an LMF, as well as between an RAN and the LMF and provides a positioning service management function for transmission and supervision services in this flow.
LMF: It is a location management function (LMF), which stores and manages location information of a terminal.
TRP: It is a transmission-reception point (TRP), which is responsible for measuring and positioning a terminal.
Data Center: The data center receives a distribution of authorized UEs and a distribution of initial access request, which are acquired by a base station, and calculates optimal beam coverage based on a machine learning algorithm, to ensure that a malicious UE cannot access and minimize the impact on the authorized UEs.

As shown in FIG. 16, the principle of the information interaction of the new radio denial-of-service (DOS) attack defense of this embodiment of the present invention is as follows:
An attacker initiates a new radio DOS attack to a base station NG-RAN Node. When access resources exceed a preset value, starts an attack detection flow. Firstly, the base station NG-RAN Node counts an access request rate and a preamble for access request use. If the access request rate and the preamble exceed preset values, controlling the RRC Connection Reject signaling that is issued, and observing access behavior of a UE, and transmitting the above acquired access information to a machine learning algorithm to make a decision. If a decision-making result of the algorithm is abnormal, the base station NG-RAN Node enables a function of measuring a location of an access request signal source and transmits an information measurement request to a plurality of TRPs. The plurality of TRPs use a TDOA positioning technology (or other radio positioning technologies) to measure access request with the same preamble and acquired measured information. The plurality of TRPs report measured data, i.e. the measured information, to the base station NG-RAN node. The base station NG-RAN Node will determine the location of the access request signal source and the distribution of the authorized UEs based on the measured data, and report positioning information to an AMF of a core network. The AMF reports the measured data, i.e. the positioning information, to an LMF for managing the location information of the access signal source. Then, the above measurement process is continuously repeated to enable the LMF to acquire sufficient location information and report and upload the location information, i.e. the positioning information, to a data center.

The data center receives the distribution of the authorized UEs and the distribution of the initial access request, which are acquired by the LMF, calculates a location of a malicious UE and optimal beam coverage based on the machine learning algorithm, to ensure that the malicious UE cannot access and minimize the impact on the authorized UEs, and transmits the strategy, i.e. a beam control strategy, to the LMF of the core network. After the LMF transmits the beam control strategy to the AMF, the AMF then transmits the beam control strategy to the base station NG-RAN Node, and the base station NG-RAN Node notifies a base station network management to execute the beam control strategy and complete the protection.

In conclusion, the embodiments of the present invention provide a new radio denial-of-service (DOS) attack defense method and apparatus, which are mainly used for solving a problem of a security threat that in a multi-synchronous signal block (SSB) NR communication system, a malicious terminal initiates an access request to consume limited new radio resources of the base station.

The embodiments of the present invention demonstrate and analyze the risk of the denial-of-service attack that uses the radio resource control connection request (MSG3) as an attack load on the base station in the new radio access stage. In response to the problem that using a blacklist technology cannot eliminate the residual risk and will exacerbate the risk of the denial-of-service attack, a method is provided, which identifies a new radio denial-of-service attack based on combination of various manners such as the spatial distribution of the UEs, the new radio access rate, the new radio half-connection proportion, and the new radio access behavior with reference to the machine learning algorithm. In an NR system, an access process of a UE is completed by using a new radio beam mechanism. the UE can select an optimal beam to complete new radio access. The embodiments of the present invention detect the location information of the malicious UE to enable the base station to adjust the delay, phase, and power of a beam signal, change a part of the beam coverage of the base station, artificially generate a coverage hole, exclude the malicious UE from the cell coverage range of the base station, ultimately isolate the malicious UE in the physical space, and interrupt the radio access process of the malicious UE. Meanwhile, without modifying an original communication architecture and flow, protection against a radio access request initiated by a malicious terminal is finally implemented based on a preset protection strategy. Thus, the risk of the denial-of-service attack that the base station faces is greatly relieved, and availability and toughness of a wireless communication network in new radio access are improved.

The technical solutions provided in the embodiments of the present invention are applicable to the technical field of new radio security for the base station and any scenario in which a terminal accesses the base station through new radio to access base station services based on an NR protocol, including but not limited to: a mobile communication service scenario in which a user accesses a base station network through new radio, and an Internet of things (IoT) scenario using the NR protocol in which a terminal access a management and control system through new radio. The embodiments of the present invention significantly improve the availability of a base station product using the NR protocol and can effectively eliminate DOS and a DOS attack risk that are introduced by a new radio access mechanism. The residual risk of the denial-of-service and the distributed denial-of-service attack that are caused by a 3GPP protocol in a current 5G new radio access flow can be basically eliminated, and the availability of a base station access service can be effectively improved. A malicious UE that uses a new radio access flow to carry out a denial-of-service attack can be effectively identified, and attack traffic can be accurately cut off. This solves the problem that a current mainstream blacklist cannot interrupt the new radio DOS attack and has side effects. Using the radio directionality characteristic to physically isolate an attacker is applicable to protecting against most new radio attacks.

The above descriptions are only preferred embodiments of the embodiments of the present invention Embodiments, and are not intended to limit the embodiments of the present invention. Those skilled in the art can make various changes and transformations on the embodiments of the present invention. Any modification, equivalent replacement, and improvement made within the principles of the embodiments of the present invention shall fall within the protection scope of the present invention.

## Claims

1. A defense method for attack of new radio denial-of-service, DOS, performed by a base station, comprising:
positioning a user equipment, UE, that initiates the new radio DOS attack to obtain location information of the UE, in response to the UE initiating a new radio DOS attack; and
adjusting a beam coverage region of the base station based on the location information, to exclude the UE that initiates the new radio DOS attack from a beam coverage range.

2. The method according to claim 1, wherein the positioning a user equipment, UE, that initiates the new radio DOS attack to obtain location information of the UE, comprising:
requesting measured information from a plurality of transmission-reception points, TRPs, wherein the plurality of TRPs perform beam positioning on the UE that initiates the new radio DOS attack by using a time difference of arrival, TDOA, based on a preamble used by the UE that initiates the new radio DOS attack for random access.

3. The method according to claim 1, wherein the adjusting a beam coverage region of the base station based on the location information, comprising:
transmitting the location information and distribution data of an authorized UE to a data center, wherein the authorized UE comprises a UE that does not initiate a new radio DOS attack; and
receiving optimal beam coverage issued by the data center, and adjusting the beam coverage region based on the optimal beam coverage.

4. The method according to claim 3, wherein the adjusting the beam coverage region based on the optimal beam coverage, comprising one of the following:
turning off the beam in which the UE that initiates the new radio DOS attack is located, in response to a cell in which the base station is located being a low-frequency cell and a quantity of authorized UEs of a beam in which the UE that initiates the new radio DOS attack is located being less than a first preset threshold; and
turning off a beam in which the UE that initiates the new radio DOS attack is located or adjusting the beam in which the UE that initiates the new radio DOS attack is located, in response to the cell in which the base station is located being a millimeter-wave cell.

5. The method according to claim 1, wherein the method further comprises:
determining whether a UE that initiates the radio access request initiates a new radio DOS attack, by detecting access rate of UE that initiate radio access request and/or a generation rate of a timer timeout event corresponding to the radio access request, in response to an access resource consumption of the base station reaching a preset resource consumption value.

6. The method according to claim 5, wherein the determining whether a UE that initiates the radio access request initiates a new radio DOS attack, by detecting access rate of UE that initiate radio access request and/or a generation rate of a timer timeout event corresponding to the radio access request, comprising:
detecting whether beam access distribution of the UE that initiate the radio access request is abnormal, based on the access rate of the UE that initiate the radio access request and the generation rate of the timer timeout event;
detecting whether an access behavior of the UE with the abnormal beam access distribution is abnormal, in response to the beam access distribution of a UE that initiates the radio access request being abnormal; and
detecting a UE with an abnormal access behavior based on a machine learning algorithm to determine the UE that initiates the new radio DOS attack.

7. The method according to claim 6, wherein the detecting whether beam access distribution of the UE that initiate the radio access request is abnormal, comprising:
counting preamble of the UE that initiate the radio access request, in response to the access rate of the UE that initiate the radio access request reaching a first preset value and/or the generation rate of the corresponding timer timeout event reaching a second preset value; and
determining the beam access distributions of the UEs that initiate the radio access request is abnormal, in response to a quantity of UE that use a fixed preamble to initiate radio access request in the same beam reaching a third preset value.

8. The method according to claim 6, wherein the detecting whether an access behavior of the UE with the abnormal beam access distribution is abnormal, comprising:
adjusting a wait time value in radio resource control, RRC, setup reject signaling; and
determining the access behavior of the UE that initiate the radio access request is abnormal, in response to the adjusted wait time value failing to cause the access rate of the UE that initiate the radio access request to reach a preset variation range.

9. A defense apparatus for attack of new radio denial-of-service, DOS, applied to a base station and comprising:
a positioning module, configured to position a user equipment, UE, that initiates the new radio DOS attack to obtain location information of the UE, in response to the UE initiating a new radio DOS attack; and
an adjustment module, configured to adjust a beam coverage region of the base station based on the location information, to exclude the UE that initiates the new radio DOS attack from a beam coverage range.

10. The apparatus according to claim 9, wherein the positioning module is further configured to request measured information from a plurality of transmission-reception points, TRPs, wherein the plurality of TRPs perform beam positioning on the UE that initiates the new radio DOS attack by using a time difference of arrival, TDOA, based on a preamble used by the UE that initiates the new radio DOS attack for random access.

11. The apparatus according to claim 9, wherein the adjustment module comprises:
a transmitting unit, configured to transmit the location information and distribution data of a authorized UE to a data center, wherein the authorized UE comprises a UE that does not initiate a new radio DOS attack; and
a receiving unit, configured to receive optimal beam coverage issued by the data center, and adjust the beam coverage region based on the optimal beam coverage.

12. The apparatus according to claim 9, further comprising:
a detecting module, configured to determine whether a UE that initiates the radio access request initiates a new radio DOS attack, by detecting access rate of UE that initiate radio access request and/or a generation rate of a timer timeout event corresponding to the radio access request, in response to an access resource consumption of the base station reaching a preset resource consumption value.

13. The apparatus according to claim 12, wherein the detecting module comprises:
a distribution detecting unit, configured to detect whether beam access distribution of the **UE** that initiate the radio access request is abnormal, based on the access rate of the **UE** that initiate the radio access request and the generation rate of the timer timeout event;
a behavior detecting unit, configured to detect whether an access behavior of the **UE** with the abnormal beam access distribution is abnormal; and
an algorithm determining unit, configured to detect a **UE** with an abnormal access behavior based on a machine learning algorithm to determine the **UE** that initiates the new radio DOS attack.

14. A computer-readable storage medium, storing a computer program, wherein the computer program is configured to, when the computer program is executed by a processor, cause the processor to implement the steps of the method according to any one of claims 1 to 8.

15. An electronic apparatus, comprising a memory, a processor, and a computer program stored in the memory and is executable by the processor, the processor is configured to execute the computer program to implement the steps of the method according to any one of claims 1 to 8.
